# EUROPÄISCHE PATENTSCHRIFT

(11) **EP 3 047 902 B1**
(45) Veröffentlichungstag und Bekanntmachung des Hinweises auf die Patenterteilung: **16.05.2018**
(21) Anmeldenummer: 16000027.9
(22) Anmeldetag: 11.01.2016
(51) Int. Cl.: B01F 11/02, B60S 3/04, B08B 1/00

(54) **HOMOGENISIEREN VON REINIGUNGS- UND PFLEGEMITTELN, U. A. FÜR WASCHANLAGEN, MITTELS ULTRASCHALL**
HOMOGENISATION OF CLEANING AND CARE AGENTS, ETC. FOR WASH STATIONS, BY MEANS OF ULTRASOUND
HOMOGÉNÉISATION DE PRODUIT D'ENTRETIEN OU DE NETTOYAGE ENTRE AUTRES POUR INSTALLATIONS DE LAVAGE, À L'AIDE D'ULTRASONS

(30) Priorität: 16.01.2015 CH 532015
(43) Veröffentlichungstag der Anmeldung: 27.07.2016
(73) Patentinhaber: KKS Ultraschall AG, 6422 Steinen (CH)
(72) Erfinder: Gnos, Robert, 8932 Mettmenstetten (CH)
(74) Vertreter: Dittmann, Rolf

(56) Entgegenhaltungen:
- WO-A2-2009/135095
- DE-C- 952 763

## Beschreibung

Die Erfindung betrifft ein Verfahren zur Reinigung und Pflege von motorbetriebenen Fahrzeugen, bei dem das Fahrzeug einer Reinigungs- und/oder Pflegevorrichtung zugeführt und mit zumindest einem Reinigungs- und/oder Pflegemittel in wässriger Lösung, die zusammen eine Flüssigkeitsmischung in einer vorherbestimmten, gewünschten Konzentration bilden, behandelt wird sowie eine Vorrichtung zur Durchführung dieses Verfahrens unter Verwendung von Ultraschall.

Unter Ultraschall wird eine mechanische Schwingung in einem Frequenzbereich von 16 kHz bis 1 GHz verstanden, wobei nur der Schall unterhalb von 20 kHz für den Menschen noch wahrnehmbar ist. Ultraschall einer gewünschten Frequenz kann über einen Generator erzeugt werden, der eine Netzspannung in eine hochfrequente Hochspannung umwandelt und diese auf ein Schwinggebilde überträgt, das aus einem Konverter, einem Booster und einer Sonotrode besteht.

Ultraschall kann in dem weiter oben angegebenen Frequenzbereich ebenso mittels eines elektrischen oder elektromechanischen Ultraschallwandlers erzeugt werden. Zum Senden von Ultraschallsignalen, z.B. in Flüssigkeiten, wie Wasser, können dabei piezoelektrische oder piezokeramische Werkstoffe als Wandlerelement dienen, um elektrische Signale in mechanische Schwingungen und umgekehrt umzusetzen. Bekannt sind insbesondere elektrische Ultraschallwandler aus Quarz oder Blei-Zirkonat-Titanat- bzw. PZT-Mischkeramik.

Bekannt ist die Verwendung solcher Ultraschallwandler als Sensoren für unterschiedlichste Messungen. Der für die jeweilige Messung genutzte Ultraschall wird dabei erzeugt, indem ein piezoelektrisches Element durch Spannungsänderungen zu Schwingungen angeregt wird. Der auf diese Weise erzeugte Ultraschall wird von einem Empfänger aufgenommen, welcher die auf ihn einwirkenden Ultraschallsignale wieder in eine Spannungsänderung umwandelt. Bekannte Verwendungen sind der Einsatz als Druck- oder Füllstandssensoren, insbesondere als Durchflussmesser.

Es ist ausserdem bereits bekannt, Ultraschall einerseits zur Reinigung und andererseits in der chemischen Verfahrenstechnik oder der Durchführung chemischer Reaktionen einzusetzen. Unabhängig von dem jeweiligen Anwendungsgebiet wird dabei das physikalische Phänomen der Kavitation zunutze gemacht. Es lässt sich immer dann beobachten, wenn eine Flüssigkeit und eine ausreichende Ultraschall-Intensität vorhanden sind. Ultraschall breitet sich in Flüssigkeiten in Form von Längswellen aus. Dabei entstehen physikalisch bedingt Unter- und Überdruckphasen, die sich abwechseln und somit zu einem lokalen Aufbrechen der Flüssigkeitsstruktur und zu einer Blasenbildung führen. Ist die Ultraschall-Leistung gross genug gewählt, wird der Dampfdruck der Flüssigkeit in der Blase so weit herabgesetzt, dass die Flüssigkeit in der Blase verdampft. Es entsteht eine Dampfblase. In der Überdruckphase kondensiert der Dampf in der Blase wieder zu der Flüssigkeit. Es entstehen schwingende, in ihrer Grösse oszillierende Dampfblasen. Die oszillierenden Dampfblasen bilden Keime für das Zusammenfallen der vielen Luftbläschen, die immer in Lösungen und Lösungsgemischen vorhanden sind. Die vereinten Luftblasen bilden grosse Luftblasen, die schneller aus der Flüssigkeit aufsteigen und an die Umgebung abgegeben werden. Die Flüssigkeit wird entgast. Bei sehr hohen Ultraschall-Leistungen ist die Kondensation des Dampfes in der Dampfblase langsamer als der plötzliche Flüssigkeitseinstrom aus der Blasenumgebung und es kommt zur Dampfblasenimplosion. Es entstehen kurzzeitig sehr starke Druckstösse in Grössenordnungen von mehreren hundert MPa. Beide Phänomene tragen dazu bei, dass Lösungen, Emulsionen und Flüssigkeitsgemische homogenisiert werden und durch das Austreiben der Luftbläschen länger homogen bleiben. Diese beiden Effekte werden unter dem Begriff der Kavitation zusammengefasst und nutzbar gemacht.

Die Nutzung dieser Technologie in Ultraschall-Reinigungsanlagen für die Reinigung von z.B. Metallteilen ist grundsätzlich bereits bekannt und wird speziell auch für die Feinreinigung von Präzisionsteilen in der Produktion eingesetzt. Dabei werden die zu reinigenden Metallteile in ein, oder nacheinander in mehrere Ultraschall-Behandlungsbecken getaucht, wobei über den Booster jeweils der zur Anwendung kommende Ultraschall optimiert wird. Über den Booster kann z.B. eine zeitlich getaktete Leistungserhöhung erreicht werden. Ausserdem können Ultraschall-Frequenzen überlagert werden, um keine Schallschatten, sondern ein möglichst gleichmässiges Reinigungsergebnis zu erzielen. Das solcherart durchgeführte Reinigen mit Ultraschall umfasst in der Regel auch ein Entgasen der Reinigungslösung in dem Reinigungsbecken während des Reinigungsprozesses. Nach einer solchen Ultraschall-Reinigung erfolgt in der Prozesstechnik üblicherweise ein Spülvorgang in dafür vorgesehenen Spülbecken, in denen z.B. noch Rückstände von Chemikalien entfernt werden. Um die Spülwirkung zu erhöhen, ist es auch bekannt, zusätzlich eine in der Regel zeitgesteuerte Drucklufteindüsung einzusetzen.

Über diese Anwendung zur Reinigung von (Metall)-Teilen hinaus ist es ebenso bereits bekannt, Ultraschall im Rahmen der Sonochemie zum Dispergieren und Mischen in der chemischen und pharmazeutischen Industrie einzusetzen. Dabei werden in der Regel Ultraschall-Frequenzen zwischen 20 kHz und 40 kHz genutzt.

Im Hinblick auf die äusserliche Reinigung und Pflege von motorbetriebenen Fahrzeugen sind als bekannter Stand der Technik insbesondere übliche Waschanlagen zu nennen, wie zum Beispiel die WO2009/135095A1. Diese weisen einen portalartigen Rahmen auf, der in Längsrichtung eines zu waschenden Fahrzeugs vor- und zurückbewegbar ist. Der Rahmen weist auf beiden Seiten zumindest eine drehbare und vertikal angeordnete Reinigungsvorrichtung auf, die beispielsweise in Form zumindest einer Bürste ausgebildet sein kann. Zusätzlich weist eine solche Waschanlage zumindest eine quer verlaufende und horizontal angeordnete Reinigungsvorrichtung für den oberen Teil des Fahrzeugs auf. Die Reinigungsvorrichtungen werden über Elektromotoren angetrieben und weisen Steuerungsmittel, z.B. in Form von Sensoren, auf, die ein automatisches Anpressen der Reinigungsvorrichtungen während des Waschvorgangs gewährleisten und die Anpresskraft der Reinigungsvorrichtungen gegen die Oberfläche des jeweiligen Fahrzeugs konstant halten. Die Reinigungsvorrichtungen folgen den Konturen des Fahrzeugs, wobei Wasch- und/oder Pflegemittel auf dessen Oberfläche und auf die Oberfläche der Reinigungsvorrichtungen gesprüht wird.

Solche Waschanlagen sind bekannt zur Reinigung von Personenkraftwagen, Lastkraftwagen, Zügen und Bussen, wobei zwei verschiedene Arten solcher Waschanlagen zu unterscheiden sind. Neben den bereits beschriebenen Portalwaschanlagen sind auch Waschstrassen bekannt, die insbesondere für die äusserliche Reinigung von Zügen eingesetzt werden.

Bei der Waschstraße wird das Fahrzeug mit Hilfe eines Förderbandes durch die Waschanlage gezogen. Die Reinigungsvorrichtungen, wie Reinigungsbürsten, verbleiben dann ortsfest und bewegen sich nur vertikal oder horizontal. In neueren Anlagen gibt es jedoch inzwischen auch lineare Bürstenportale, die dem Fahrzeug bis zu etwa 1,5 Meter folgen, um dadurch eine gründliche Front- bzw. Heckreinigung zu gewährleisten.

Auch im Rahmen von Autowaschanlagen ist es durch die deutsche Gebrauchsmusterschrift DE202004019610 U1 bereits bekanntgeworden, die Reinigungsleistung durch den Einsatz von Ultraschall zu verbessern, indem die Ultraschallenergie direkt auf die zu waschende Fahrzeugoberfläche abgegeben wird. Dabei wird der Ultraschallgeber direkt in den Waschbürstenkern oder in dessen Drehachse integriert und an die zumindest eine Austrittsöffnung für den Wasserstrahl gekoppelt, so dass der Ultraschallgeber die Ultraschallenergie direkt an den Wasserstrahl abgibt, der die Fahrzeugoberfläche trifft. Die Ultraschallenergie wird mit nahezu senkrechten Ultraschallschwingungen auf die Fahrzeugoberfläche abgegeben. Zusätzlich zu dem Reinigen der Fahrzeugoberfläche ist gemäss dieser Gebrauchsmusterschrift auch ein Polieren mittels Ultraschall möglich. Dann gibt der Ultraschallgeber die Ultraschallenergie während des Poliervorgangs direkt über einen Polierteller oder eine Polierhaube auf die Fahrzeugoberfläche ab und soll auf diese Weise die Politur verfeinern.

Des weiteren ist durch die deutsche Gebrauchsmusterschrift DE 201 04 578 U1 eine Ultraschall-Reinigungsanlage zum Reinigen von Pkw- oder Lkw-Rädern bekanntgeworden. Diese Ultraschall-Reinigungsanlage weist einen wannenförmigen Behälter mit einer Reinigungsflüssigkeit auf, mit am Boden und/oder den Seitenwänden des Behälters angeordneten Ultraschallschwingern und einer Haltesowie Hubvorrichtung für die zu reinigenden Räder. Die Ultraschallschwinger sind dabei so angebracht, dass sie sich jeweils mittig und sehr nahe an den zu reinigenden Rädern befinden, um diese intensiv zu beschallen.

Ausgehend von diesem Stand der Technik lag der vorliegenden Erfindung die Aufgabe zugrunde, ein Verfahren zur Reinigung und Pflege von motorbetriebenen Fahrzeugen bereitzustellen, das durch einen gegenüber dem Stand der Technik unterschiedlichen Ansatz bei der Verwendung von Ultraschall verbesserte Ergebnisse bei gleichzeitig vereinfachter Konstruktion in der Anwendung erzielt und darüber hinaus die Anwendungsmöglichkeiten insbesondere im Hinblick auf die Pflege von motorbetriebenen Fahrzeugen erweitert.

Gelöst wird diese Aufgabe durch ein Verfahren zur Reinigung und/oder Pflege von motorbetriebenen Fahrzeugen, bei dem das Fahrzeug einer Reinigungs- und/oder Pflegevorrichtung zugeführt und mit zumindest einem Reinigungs- und/oder Pflegemittel in wässriger Lösung, die zusammen eine Flüssigkeitsmischung in einer vorherbestimmten, gewünschten Konzentration bilden, behandelt wird. Erfindungsgemäss wird das Reinigungs- und/oder Pflegemittel vorab mit dem Wasser zur Erreichung der gewünschten Konzentration gemischt und anschliessend einer Vorbehandlungseinheit zugeführt, wobei es einen Behälter der Vorbehandlungseinheit durchfliesst, der an dem äusseren Umfang zumindest einen Ultraschallwandler aufweist. Sein Gehäuse ist als eine Membran ausgebildet, so dass die Ultraschallschwingungen mittels der Membran auf die Mischung aus Reinigungs- und/oder Pflegemittel und Wasser bei dem Durchfliessen des Behälters übertragen und die Mischung dabei durch den Ultraschall homogenisiert wird, bevor das Fahrzeug mit der homogenisierten Flüssigkeitsmischung behandelt wird.

Durch das Homogenisieren des Reinigungs- und/oder Pflegemittels mit dem Wasser, mit dem zusammen es zunächst als eine Mischung hergestellt wird, verändern sich die Produkteigenschaften der Mittel-Wasser-Mischung äusserst positiv. Das jeweilige Reinigungs- und/oder Pflegemittel wird durch seine homogene Verteilung in dem Wasser technisch leichter handhabbar. Es haftet besser auf der zu reinigenden Oberfläche, seine Reinigungs- oder Pflegewirkung wird erhöht und die Konzentration der Mittel-Wasser-Mischung, d.h. der Anteil des jeweils eingesetzten Produkts in der Mischung mit dem Wasser, konnte signifikant reduziert werden.

Bei der Durchführung des erfindungsgemässen Verfahrens kann Ultraschall einer Frequenz von etwa 20 - 140 kHz verwendet werden, bevorzugt einer Frequenz von etwa 20 bis 60 kHz, besonders bevorzugt einer Frequenz von etwa 25 - 30 kHz.

Gemäss einer bevorzugten Ausführungsform des erfindungsgemässen Verfahrens kann vorgesehen sein, dass das Fahrzeug mit der homogenisierten Flüssigkeitsmischung besprüht wird.

Auf diese Weise lässt sich die homogenisierte Mittel-Wasser-Mischung fein auf der jeweiligen Fahrzeugoberfläche verteilen, so dass der Vorteil der erfindungsgemässen Ultraschallbehandlung sich nochmals deutlicher ausprägen kann.

Die hier durch die Ultraschallbehandlung in ihrer Eigenschaft verbesserten Pflegemittel können Glanz- oder Wachspflegemittel, Befeuchtungsmittel, Enteisungsmittel und Trennmittel umfassen, wobei diese Aufzählung nicht abschliessend gemeint ist.

Als besonders vorteilhaft ist zu erwähnen, dass das erfindungsgemässe Ultraschall-Behandlungsverfahren im Hinblick auf die Mittel, welche dieser Behandlung unterworfen werden können, um danach eine in ihren Eigenschaften verbesserte Mittel-Wasser-Mischung zu ergeben, keiner Beschränkung unterliegt. Neben Reinigungsmitteln aller Art können genauso die hier genannten Pflegemittel einer Verbesserung ihrer Eigenschaften zugeführt werden. Deshalb sind im Rahmen der Pflegemittel ausdrücklich auch Enteisungsmittel für Züge und Flugzeuge einbezogen.

Dass das hier erfindungsgemäss angewandte Behandlungsverfahren gleichermassen bei allen Reinigungs- und/oder Pflegemittel angewendet werden kann, ohne durch die spezielle chemische Natur des Mittels einer Beschränkung unterlegen zu sein, ist bedingt durch die Tatsache, dass Ultraschall als Behandlungsmedium eingesetzt und dieser allgemein für alle in diesem Bereich möglichen Mittel einsetzbar ist. Dies ist ein grosser Vorteil.

Das erfindungsgemässe Verfahren kann mittels einer Reinigungs- und/oder Pflegevorrichtung für Flugzeuge genauso durchgeführt werden, wie in einer Waschanlage für Personenkraftwagen, Lastkraftwagen, Strassenbahnen/Tram und/oder Schienenfahrzeugen aller Art. Bei den Waschstrassen kann es in Portalwaschanlagen genauso Anwendung finden wie in Waschstrassen, um vor allem Schienenfahrzeuge, darin eingeschlossen moderne Schnellzüge, Lokomotiven und sonstige Triebwagen und Wagons aller Art für die Beförderung von Gütern und Personen, effektiv reinigen und pflegen zu können.

Die Erfindung bezieht sich auch auf die zuvor genannte Vorbehandlungseinheit zur Durchführung des vorgenannten Verfahrens zur Reinigung und/oder Pflege von motorbetriebenen Fahrzeugen in einer Reinigungs- und/oder Pflegevorrichtung nach einer seiner genannten Ausgestaltungen. Dazu weist die Vorbehandlungseinheit einen Behälter auf, mit einem Flüssigkeitszulauf und einem Flüssigkeitsablauf, wobei der Behälter an seinem äusseren Umfang mit zumindest einem Ultraschallwandler versehen und das Gehäuse des Behälters als eine Membran ausgebildet ist, für ein Übertragen der Ultraschallschwingungen auf eine sich in dem Behälter befindlichen und diesen passierenden Flüssigkeitsmischung.

Neben der genannten breiten Anwendbarkeit im Hinblick auf die Mittel, welche zum Einsatz kommen, ist ebenso vorteilhaft, dass hinsichtlich der Reinigungs- und/oder Pflegevorrichtung, innerhalb welcher das Verfahren zur Anwendung kommen kann, keine Beschränkungen bestehen. So kann das Verfahren auch für Flugzeuge durchgeführt werden. Deren Enteisung wird beispielsweise mit einem fahrbaren Kraftfahrzeug bewirkt, das eine Art Hebebühne aufweist, um den Flugzeugkörper allseitig mit dem Enteisungsmittel besprühen zu können. Schon aufgrunddessen weist das Kraftfahrzeug eine Starkstromversorgung auf, so dass auch noch der oder die Ultraschallwandler mit dem zur Übertragung der Ultraschallschwingungen ausgebildeten Behälter in das Kraftfahrzeug integriert und elektrisch versorgt werden können. Dies schon deshalb, weil die Vorbehandlungseinheit als eine weitere Voraussetzung für ihr Integrieren eine dafür akzeptable Grösse aufweist. Wie Praxisversuche gezeigt haben, erfüllt die erfindungsgemässe Vorbehandlungseinheit diese Voraussetzung aufgrund ihrer kleinen und kompakten Bauweise bestens.

Vorzugsweise ist der Behälter der erfindungsgemässen Vorbehandlungseinheit umfangsverteilt mit mehr als einem Ultraschallwandler versehen.

Auf diese Weise wird eine möglichst homogene Durchdringung des Innenraums des Behälters mit dem Ultraschall bewirkt.

Gemäss einer weiteren bevorzugten Ausführungsform weist der jeweilige Ultraschallwandler ein piezokeramisches Element auf und ist mit dem Behälter der Vorbehandlungseinheit auf dessen Aussenseite mechanisch gekoppelt.

Im folgenden soll das erfindungsgemäße Verfahren zusammen mit der dafür verwendeten Vorrichtung anhand eines Ausführungsbeispiels im Zusammenhang mit der beigefügten Zeichnung näher erläutert werden.

Es zeigen:

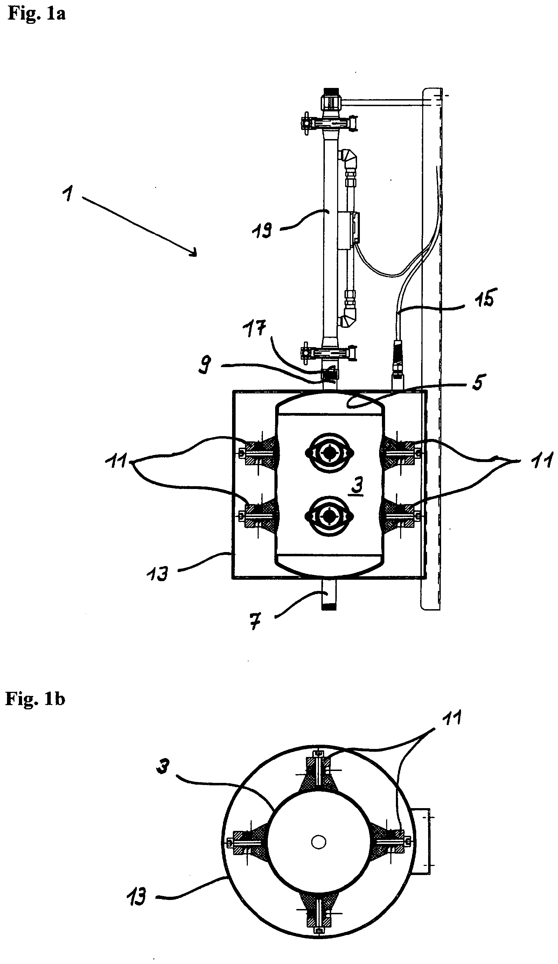

- Fig. 1a:: eine schematische Darstellung eines Behälters zur Homogenisierung von Reinigungs- und Pflegemitteln mittels Ultraschall für Waschanlagen,
- Fig. 1b:: ein Querschnitt durch den Behälter nach Fig. 1a, und

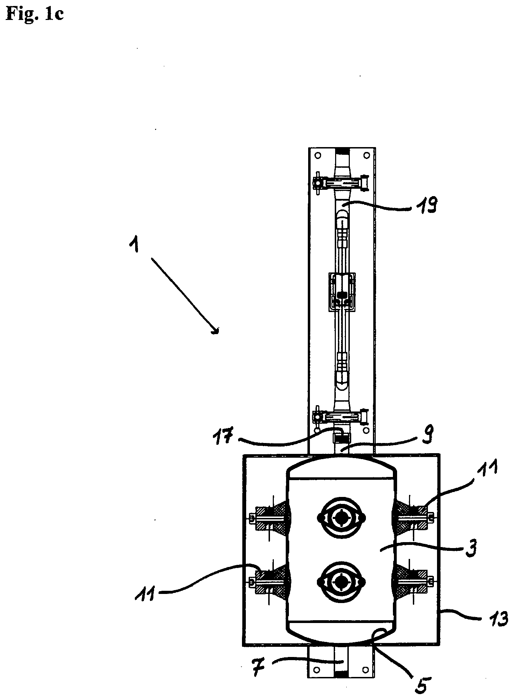

- Fig. 1c:: eine schematische Darstellung nach Fig. 1a, um 90° gedreht,

Die Fig. 1a - 1c zeigen eine insgesamt mit der Bezugsziffer 1 versehene Vorbehandlungseinheit, welche in Wasch- und Pflegeanlagen unterschiedlichster Art Verwendung finden und entsprechend dort integriert werden kann, die der Reinigung und/oder Pflege von insbesondere motorbetriebenen Fahrzeugen dienen. Die dargestellte und im folgenden näher erläuterte Vorbehandlungseinheit 1 ist auf eine solche Behandlung der Reinigungs- und/oder Pflegemittel unterschiedlichster Art ausgerichtet, die dem Einsatz der Mittel in der Anlage selbst vorgelagert ist.

Entsprechend weist die Vorbehandlungseinheit 1 einen Behälter 3 auf, welcher dazu ausgebildet ist, Ultraschallschwingungen in seinen Innenraum zu leiten, um darin das erfindungsgemässe Verfahren durchzuführen. Der Behälter 3 ist in diesem Ausführungsbeispiel in etwa zylinderförmig ausgebildet und weist entsprechend einen in etwa kreisrunden Querschnitt auf, wie aus Fig. 1b ersichtlich. Die jeweiligen Begrenzungen 5 des Behälters 3 quer zur Längsrichtung, d.h. im Ausführungsbeispiel an den jeweiligen Schmalseiten des Behälters 3, sind leicht nach aussen hin gewölbt ausgebildet und weisen an einer dieser Begrenzungen 5 einen Flüssigkeitszulauf 7 auf. Entsprechend befindet sich an der in Längsrichtung gegenüberliegenden Begrenzung ein Flüssigkeitsablauf 9.

An seinem äusseren Umfang in Längsrichtung verteilt weist der Behälter 3 insgesamt mit der Bezugsziffer 11 versehene Ultraschallwandler auf, die aus piezokeramischen Elementen bestehen, welche jeweils über zwei metallische Endstücke mechanisch vorgespannt sind. Im Ausführungsbeispiel wurden piezokeramische Wandler aus PZT-Mischkeramik verwendet.

Eingebettet ist dieser Behälter 3 in ein nach aussen mit einer Isolierung versehenes Gehäuse 13, das den Behälter 3 umschliesst und damit ebenfalls nach aussen hin isoliert. Das Gehäuse 13 schliesst jeweils bündig mit den nach aussen gewölbten Schmalseiten des Behälters 3 ab. Hier befinden sich auch der Flüssigkeitszulauf 7 und -ablauf 9.

Das Gehäuse 13 des Behälters 3 ist als Membran ausgebildet, um die Ultraschallschwingungen in den Innenraum des Behälters 3 und damit in die sich in dem Behälter 3 befindliche und diesen passierende Flüssigkeit zu übertragen. Dazu besteht das Gehäuse 13 in diesem Ausführungsbeispiel aus Edelstahl mit einer Stärke von 2mm. Ebenso sind andere Wandstärken bis hin zu 5mm möglich. Die Ultraschallwandler 11 sind in der Weise umfangsverteilt an dem Behälter 3 angeordnet, dass ein möglichst umfassendes Beschallen der sich in dem Behälter 3 befindlichen und diesen passierenden Flüssigkeit erreicht wird. Auf die Art dieser Flüssigkeit wird weiter unten noch näher eingegangen.

Um dieses möglichst umfassende Beschallen zu erreichen, weist der Behälter 3 in diesem Ausfiihrungsbeispiel je vier der Ultraschallwandler 11 in zwei zueinander benachbarten Ebenen auf, die jeweils umfangsverteilt und etwa äquidistant angeordnet sind, wobei sich hier aufgrund der Anordnung in zwei Ebenen acht der Ultraschallwandler 11 an dem Behälter 3 befinden.

Diese konkrete Darstellung des als Übertragungsmedium für Ultraschallwellen dienenden Behälters 3 dient dem Zweck der Erläuterung dieses Ausführungsbeispiels. Dem Fachmann erschliesst sich dabei jedoch ohne weiteres, dass der Behälter 3 nicht zwangsläufig die angegebene Anzahl von Ultraschallwandlern 11 in der angegebenen Orientierung aufweisen muss. Das erfindungsgemässe Verfahren führt auch zu einem Erfolg, wenn eine andere Anzahl von Ultraschallwandlern 11 zur Anwendung kommt und/oder deren Verteilung an dem Behälter 3 in einer anderen Ordnung vorgenommen wird. Hierauf soll vorsorglich hingewiesen werden.

In Längsrichtung des Behälters 3 bildet das Gehäuse 13 elektrische Kontaktstellen zu den Ultraschallwandlern 11, so dass diese zwischen dem Gehäuse 13 einerseits und der Wandung des Behälters 3 andererseits aufgehängt sind.

In das Gehäuse mündet ein Signalkabel 15, über welches die elektrische Versorgung der Ultraschallwandler 11 in der entsprechenden Frequenz zugeführt wird. Dieses elektrische Signal wird durch einen externen Frequenzgenerator erzeugt.

Der aus dem in dem Gehäuse 13 befindlichen Behälter 3 ragende Flüssigkeitsablauf 9 ist im Anschluss an das Gehäuse 13 über eine Muffe 17 mit einem Rohrstück 19 verbunden. Rohrstück 19 und Gehäuse 13 werden des weiteren an einem Rahmen 21 gehalten, über den ebenso die elektrische Versorgung, insbesondere das HF-Kabel 15 geführt wird. Auch das Rohrstück 19 erhält seine elektrische Versorgung auf diese Weise.

Die Vorbehandlungseinheit ist im wesentlichen aus dem Behälter 3 und den damit verbundenen Ultraschallwandlern 11 gebildet, welche im Ausführungsbeispiel Ultraschall einer Frequenz von 27 kHz erzeugen.

Auch hier ist dem Fachmann geläufig, dass die Durchführung der Erfindung grundsätzlich auch bei anderen Ultraschall-Frequenzen möglich ist, so dass die im Rahmen dieses Ausführungsbeispiels angegebene Frequenz zwar zu guten Ergebnissen führt, dass der Erfolg des nachfolgend zu beschreibenden Behandlungsverfahrens jedoch nicht auf diese Frequenz beschränkt bleibt.

Im folgenden wird die Behandlung der Flüssigkeitsmischung anhand verschiedener Beispiele erläutert.

Grundsätzlich basiert die vorliegende Erfindung auf einer der eigentlichen Anwendung, nämlich der Reinigung und Pflege von motorbetriebenen Fahrzeugen, vorgelagerten Behandlungsmethode des oder der jeweils anzuwendenden Reinigungs- und/oder Pflegemittel. Dabei wird die für die eigentliche Anwendung benötigte Mischung aus Reinigungs- und/oder Pflegemittel mit Wasser in einer vorherbestimmten, gewünschten Konzentration vorab erzeugt und zunächst, d.h. vor der eigentlichen Anwendung, ein Homogenisieren dieser Mischung mittels Ultraschall durchgeführt, während diese den für die Beschallung wie beschrieben ausgebildeten Behälter 3 durchfliesst.

Folgende Reinigungs- und Pflegemittel wurden exemplarisch in wässriger Verdünnung untersucht und ergaben die nachgenannten vorteilhaften Verbesserungen:

### Beispiel 1: Reinigung und Pflege von Personenkraftwagen in einer Portalwaschanlage

- 1.1 Hochdruckvorwäsche
- 1.2 Behandlung mit Aktiv-Schaum
- 1.3 Auftragen von Wachs in Form von Heiss- und Kaltwachs

Es wurde ein Reinigungsshampoo als wässrige Tensidlösung auf der Basis anionischer und nichtionischer Tenside eingesetzt, welche ein Alkylether-Natriumsalz und Zitronensäure enthielt.

Als Aktiv-Reinigungsschaum wurde eine wässrige Tensidlösung auf der Basis anionischer und nichtionischer Tenside eingesetzt, welche ein Alkylether-Natriumsalz und 2-Butoxyethanol enthielt.

Es wurde ein Wachs mit Silikonen und Lösemittel auf der Basis von Isoalkanen, n-Alkanen, Cyclen, mit geringem Aromatenanteil verwendet.

### Beispiel 2: Reinigung und Pflege von Strassenbahn/Tram in einer Waschstrasse

- 1.1 Hochdruckvorwäsche
- 1.2 Behandlung mit Aktiv-Schaum
- 1.3 Auftragen von Glanztrockner

### Siehe Beispiel 1

### Beispiel 3: Enteisung einer Flugzeugoberfläche

- 3.1 Aufbringen eines Enteisungsmittels
- 3.2 Aufbringen einer Anti-icing Flüssigkeit

Um ein Flugzeug im Winter vor dem Start von Schnee und Eis zu befreien, werden Enteisungsmittel eingesetzt, die weltweit geltenden Standards unterliegen. Solche Enteisungsmittel sind Propylenglykole, die als schwach wassergefährdend eingestuft sind. Sie werden in den Mitteln in der Regel in einer Konzentration um 50% eingesetzt und enthalten üblicherweise noch Verdicker, damit ihr Haftverhalten am Flugzeugkörper verbessert wird. Ansonsten enthalten sie noch Wasser (etwa 49%).

Nach der Enteisung wird bei Bedarf eine als Anti-icing bezeichnete Schutzschicht auf die Flugzeugoberfläche aufgetragen. Anti-icing-Mittel zeichnen sich durch einen deutlich höheren Glykolgehalt von um 80% aus.

Als Ergebnis der durchgeführten Versuche wurde überraschend festgestellt, dass die für Reinigung und Pflege von motorbetriebenen Fahrzeugen verwendeten Mittel in ihrer Anwendung in wässriger Lösung durch die vorgelagerte Behandlung des Homogenisierens des Mittels mit dem Wasser mittels Ultraschall in einer besonderen Weise homogen vermischt werden, so dass sich dadurch die Produkteigenschaften deutlich verbessern. So bleibt das nach der Behandlung an die Sprühdüsen der Reinigungs- und/oder Pflegeanlage weitergegebene Mittel als homogenisierte Mischung mit dem Wasser deutlich besser an den damit besprühten Oberflächen haften, als dies bei dem herkömmlichen Sprühverfahren der Fall ist. Zusätzlich oder deshalb konnte bei den Reinigungsmitteln und auch bei der Anwendung der unterschiedlichsten Pflegemittel durchweg eine bessere Reinigungs- und/oder Pflegewirkung beobachtet werden.

So wurde ein Fahrzeugglanz erhalten, der gegenüber der entsprechenden herkömmlichen Verfahrensweise schöner und dauerhafter war. Es ergab sich eine durchweg gleichmässigere Verteilung des jeweils applizierten Mittels in Form der homogenisierten Mischung mit dem Wasser und im Fall der Anwendung eines Enteisungsmittels, das im Rahmen der vorliegenden Erfindung ebenso und ausdrücklich in die Pflegemittel einbezogen ist, wurde nach der erfindungsgemässen Behandlung eine bessere Verteilung und Haftung des Mittels an dem Fahrzeugkörper festgestellt. Dies hat auch einen positiven Effekt auf die Vorhaltezeit (holdover time: HOT), d.h. die Zeit, in der ein Flugzeug nach seiner Enteisung vor einer Wiedervereisung geschützt ist, jeweils in Abhängigkeit von dem weiteren Niederschlag und der örtlichen Temperatur. Ein weiterer gefundener positiver Effekt ist die Tatsache, dass bei dieser Behandlungsmethode der Anteil an jeweils eingesetztem Produkt signifikant reduziert werden konnte.

## Patentansprüche

1. Verfahren zur Reinigung und/oder Pflege von motorbetriebenen Fahrzeugen, bei dem das Fahrzeug einer Reinigungs- und/oder Pflegevorrichtung zugeführt und mit zumindest einem Reinigungs- und/oder Pflegemittel in wässriger Lösung, die zusammen eine Flüssigkeitsmischung in einer vorherbestimmten, gewünschten Konzentration bilden, behandelt wird, wobei das Reinigungs- und/oder Pflegemittel vorab mit dem Wasser zur Erreichung der gewünschten Konzentration gemischt und anschliessend einer Vorbehandlungseinheit (1) zugeführt wird und einen Behälter (3) der Vorbehandlungseinheit (1) durchfliesst, mit zumindest einem Ultraschallwandler (11) an dem äusseren Umfang des Behälters (3), dessen Gehäuse (13) als eine Membran ausgebildet ist, und wobei die Ultraschallschwingungen mittels der Membran auf die Mischung aus Reinigungs- und/oder Pflegemittel und Wasser bei dem Durchfliessen des Behälters (3) übertragen und die Mischung dabei durch den Ultraschall homogenisiert wird, bevor das Fahrzeug mit der homogenisierten Flüssigkeitsmischung behandelt wird.

2. Verfahren nach Anspruch 1, **dadurch gekennzeichnet, dass** Ultraschall einer Frequenz von etwa 20 - 140 kHz verwendet wird, bevorzugt einer Frequenz von etwa 20 bis 60 kHz, besonders bevorzugt einer Frequenz von etwa 25 - 30 kHz.

3. Verfahren nach Anspruch 1 oder 2, **dadurch gekennzeichnet, dass** das Fahrzeug mit der homogenisierten Flüssigkeitsmischung besprüht wird.

4. Verfahren nach einem der Ansprüche 1 bis 3, **dadurch gekennzeichnet, dass** die Pflegemittel Glanz- oder Wachspflegemittel, Befeuchtungsmittel, Enteisungsmittel und Trennmittel umfassen.

5. Verfahren nach einem der Ansprüche 1 bis 4, **dadurch gekennzeichnet, dass** es mittels einer Reinigungs- und/oder Pflegevorrichtung für Flugzeuge durchgeführt wird, welche die Vorbehandlungseinheit (1) aufweist.

6. Verfahren nach einem der Ansprüche 1 bis 4, **dadurch gekennzeichnet, dass** es in einer Waschanlage für Personenkraftwagen, Lastkraftwagen, Strassenbahnen/Tram und/oder Schienenfahrzeugen aller Art als Reinigungs- und/oder Pflegevorrichtung durchgeführt wird, welche die Vorbehandlungseinheit (1) aufweist.

7. Vorbehandlungseinheit zur Durchführung des Verfahrens zur Reinigung und/oder Pflege von motorbetriebenen Fahrzeugen in einer Reinigungs- und/oder Pflegevorrichtung nach einem der Ansprüche 1 bis 6, die einen Behälter (3) mit einem Flüssigkeitszulauf (7) und einem Flüssigkeitsablauf (9) aufweist, wobei der Behälter (3) an seinem äusseren Umfang mit zumindest einem Ultraschallwandler (11) versehen und das Gehäuse (13) des Behälters als eine Membran ausgebildet ist, für ein Übertragen der Ultraschallschwingungen auf eine sich in dem Behälter (3) befindlichen und diesen passierenden Flüssigkeitsmischung.

8. Vorbehandlungseinheit nach Anspruch 7, **dadurch gekennzeichnet, dass** der Behälter (3) umfangsverteilt mit mehr als einem Ultraschallwandler (11) versehen ist.

9. Vorbehandlungseinheit nach Anspruch 7 oder 8, **dadurch gekennzeichnet, dass** der jeweilige Ultraschallwandler (11) ein piezokeramisches Element aufweist, und dass er mit dem Behälter (3) auf dessen Aussenseite mechanisch gekoppelt ist.

## Claims

1. A method for cleaning and/or caring for motor-operated vehicles, in which the vehicle is supplied to a cleaning and/or care apparatus and is treated with at least one cleaning and/or care product in an aqueous solution, which together form a liquid mixture of a predetermined, desired concentration, wherein the cleaning and/or care product is previously mixed with the water in order to attain the desired concentration and is subsequently supplied to a pre-treatment unit (1) and flows through a tank (3) of the pre-treatment unit (1), having at least one ultrasonic transducer (11) on the outer periphery of the tank (3), the housing (13) of which is configured as a membrane, and wherein the ultrasonic oscillations are transferred, by means of the membrane, to the mixture of the cleaning and/or care product and water while flowing through the tank (3), and the mixture is thus homogenised by the ultrasound before the vehicle is treated with the homogenised liquid mixture.

2. The method according to Claim 1, **characterised in that** ultrasound of a frequency of approximately 20 - 140 kHz is used, preferably of a frequency of approximately 20 to 60 kHz, particularly preferably of a frequency of approximately 25 - 30 kHz.

3. The method according to Claim 1 or 2, **characterised in that** the vehicle is sprayed with the homogenised liquid mixture.

4. The method according to any one of Claims 1 to 3, **characterised in that** the care products comprise polishing or wax care products, moisturizing products, de-icing products and separating agents.

5. The method according to any one of Claims 1 to 4, **characterised in that** it is carried out by means of a cleaning and/or care apparatus for aeroplanes, which apparatus comprises the pre-treatment unit (1).

6. The method according to any one of Claims 1 to 4, **characterised in that** it is carried out in a wash system for passenger cars, trucks, trams and/or rail vehicles of all kinds as the cleaning and/or care apparatus which comprises the pre-treatment unit (1).

7. A pre-treatment unit for carrying out the method for cleaning and/or caring for motor-operated vehicles in a cleaning and/or care apparatus according to any one of Claims 1 to 6, which comprises a tank (3) having a liquid inlet (7) and a liquid outlet (9), wherein the tank (3) is provided, on its outer periphery, with at least one ultrasonic transducer (11) and the housing (13) of the tank is configured as a membrane, for transferring the ultrasonic oscillations to a liquid mixture located in the tank (3) and passing through said tank.

8. The pre-treatment unit according to Claim 7, **characterised in that** the tank (3) is provided with more than one ultrasonic transducer (11) distributed over the periphery.

9. The pre-treatment unit according to Claim 7 or 8, **characterised in that** the respective ultrasonic transducer (11) comprises a piezoceramic element, and that it is mechanically coupled to the tank (3) on the outer side thereof.

## Revendications

1. Procédé pour le nettoyage et/ou l'entretien de véhicules motorisés, par lequel le véhicule est amené à un dispositif de nettoyage et/ou d'entretien et est traité avec au moins un produit de nettoyage et/ou d'entretien en solution aqueuse, lesquels forment ensemble un mélange liquide à une concentration prédéterminée souhaitée, le produit de nettoyage et/ou d'entretien étant mélangé à l'eau pour obtenir la concentration souhaitée et étant amené ensuite à une unité de prétraitement (1) et traversant un récipient (3) de l'unité de prétraitement (1), avec au moins un transducteur à ultrasons (11) sur la périphérie extérieure du récipient (3), dont le boîtier (13) est formé comme une membrane, et les vibrations ultrasoniques étant transmises, au moyen de la membrane, au mélange du produit de nettoyage et/ou d'entretien et de l'eau lors de la traversée du récipient (3) et le mélange étant ainsi homogénéisé par les ultrasons, avant que le véhicule soit traité avec le mélange liquide homogénéisé.

2. Procédé selon la revendication 1, **caractérisé en ce que** des ultrasons d'une fréquence d'environ 20 - 140 kHz sont utilisés, de préférence d'une fréquence d'environ 20 à 60 kHz, en particulier de préférence d'une fréquence d'environ 25 - 30 kHz.

3. Procédé selon la revendication 1 ou 2, **caractérisé en ce que** le véhicule est aspergé avec le mélange liquide homogénéisé.

4. Procédé selon l'une des revendications 1 à 3, **caractérisé en ce que** les produits d'entretien comprennent des produits de brillantage ou de cirage, des humectants, des produits de dégivrage et des agents de séparation.

5. Procédé selon l'une des revendications 1 à 4, **caractérisé en ce qu'**il est exécuté au moyen d'un dispositif de nettoyage et/ou d'entretien pour avions, lequel présente l'unité de prétraitement (1).

6. Procédé selon l'une des revendications 1 à 4, **caractérisé en ce qu'**il est exécuté dans une installation de lavage pour voitures particulières, poids lourds, tramways et/ou véhicules ferroviaires de tout type comme dispositif de nettoyage et/ou d'entretien, lequel présente l'unité de prétraitement (1).

7. Unité de prétraitement pour l'exécution du procédé pour le nettoyage et/ou l'entretien de véhicules motorisés dans un dispositif de nettoyage et/ou d'entretien selon l'une des revendications 1 à 6, laquelle présente un récipient (3) avec une admission de liquide (7) et un écoulement de liquide (9), le récipient (3) étant muni, sur sa périphérie extérieure, d'au moins un transducteur à ultrasons (11) et le boîtier (13) du récipient étant formé comme une membrane pour une transmission des vibrations ultrasoniques à un mélange liquide se trouvant dans le récipient (3) et traversant celui-ci.

8. Unité de prétraitement selon la revendication 7, **caractérisée en ce que** le récipient (3) est équipé avec plus d'un transducteur à ultrasons (11) répartis sur sa périphérie.

9. Unité de prétraitement selon la revendication 7 ou 8, **caractérisée en ce que** le transducteur à ultrasons (11) respectif présente un élément piézocéramique, et **en ce qu'**il est couplé mécaniquement au récipient (3) sur le côté extérieur de celui-ci.
